# EUROPEAN PATENT APPLICATION

(11) **EP 1 876 527 A1**
(43) Date of publication of application: **09.01.2008**
(21) Application number: 07075139.1
(22) Date of filing: 16.02.2007
(51) Int. Cl.: G06F 9/445, H04N 5/63, H04N 5/00, H04N 5/44, H04N 7/24

(54) **Method of automatically upgrading broadcast receiving apparatus, and apparatus incorporating the same**

(30) Priority: 03.07.2006 KR 20060061916
(71) Applicant: Samsung Electronics Co., Ltd., Suwon-si, Gyeonggi-Do (KR)
(72) Inventor: Kim, Seong-jun 104-801, Samchully 2nd Apartment, Suwon-si Gyeonggi-do (KR)
(74) Representative: Hylarides, Paul Jacques

(57) **Abstract**

A method of automatically upgrading a broadcast receiving apparatus, and an apparatus incorporating it are provided. The automatic upgrading method of the apparatus includes upgrading using software included in a received broadcast signal when it is the upgrade reservation time; and supplying power to maintain upgrading operation when a power off command is input during the upgrading operation. As a result, automatic upgrading is enabled in the standby mode at a minimum use of power and irrespective of whether the broadcast contents are viewed or not.

## Description

### BACKGROUND OF THE INVENTION

### Field of the Invention:

The present invention relates to a method of automatically upgrading a broadcasting receiving apparatus, and an apparatus incorporating the same. More particularly, the present invention relates to a method of automatically upgrading a broadcasting receiving apparatus irrespective of whether the contents are viewed or not, and with maintaining a minimum consumption in the standby mode, and an apparatus incorporating the same.

### Description of the Related Art

The recent development of digital technology has enabled change of broadcasting transmission from analog to digital system, and digital broadcasting signal transmission using satellites has been commercialized. To meet with such changes, a broadcasting receiver capable of receiving both the analog and digital signals, is required. One example of such receiver is an integrated broadcasting receiver having a built-in tuner. A digital television is one of representative broadcasting receiver systems.

A digital broadcasting receiver system is capable of communicating data with any digital processing system including computer, such as DVD, digital camcorder, or digital VCR, and receives not only video and audio data, but also additional data. Therefore, it is important that the broadcasting receiver system is updated regularly to meet with the rapid expansion of the service range and changes of digital broadcasting environment.

A European-oriented broadcasting receiver system performs automatic upgrading using over the air (OTA) method, which is one of the techniques to transmit and receive application information. However, this can only be performed when the broadcast contents are viewed.

A related art broadcasting receiver system generally includes an analog processing part to reproduce the received analog broadcasting contents, and a digital processing part to reproduce digital broadcasting contents. The system is driven with initial power when in standby mode, and the digital processing part starts normal operation when the power-on command is input.

This means that the broadcasting receiver system receives the second power supply only when a power-on command is input, and that the digital processing part of the broadcasting receiver system operates to receive and reproduce digital broadcasting contents only when the second power is supplied. The digital processing part also analyzes the received digital broadcasting contents, and performs automatic upgrading when the received contents contain OTA information.

When a power-off command is input, supply of the second power is stopped, and the digital processing part stops operation as only initial power is supplied. This means that the automatic upgrading operation is abruptly stopped when the power-off command is input during the operation. The second power can be continuously supplied in order to prevent such problem, but this causes the problem of increased power consumption during the standby mode.

### SUMMARY OF THE INVENTION

Embodiments of the present invention have been developed in order to substantially solve the above and other problems associated with the conventional arrangement and provide the objectives listed below. An aspect of embodiments of the present invention is to provide a method of automatically upgrading a broadcasting receiver system irrespective of whether the broadcasting contents is viewed or not, and an apparatus incorporating the method.

It is an aspect of the present invention to provide a method of automatically upgrading a broadcasting receiver system at the minimum power consumption when the broadcasting receiver has changed to the standby mode according to a power-off command during the automatic upgrading operation, and an apparatus incorporating the method.

The inventive concept of the present invention provides a method of automatically upgrading a broadcast receiving apparatus, comprising: upgrading using software included in a received broadcast signal when it is the upgrade reservation time; and supplying power to maintain upgrading operation when a power off command is input during the upgrading operation.

The upgrading is started when the current time matches the upgrade reservation time.

Information about the current level of processing the upgrading operation is stored when the power off command is input during the upgrading operation.

The power is turned off and power for upgrading is exclusively supplied to continue the upgrading operation when the stored information about the current level of processing the upgrading operation indicates that the upgrading operation is in process.

The power is exclusively supplied for the upgrading operation and power for other operations is cut, when the power off command is input during the upgrading operation.

An aspect of an exemplary embodiment of the present invention may further include: determining whether the broadcast signal is received, when it is the upgrade reservation time; and supplying power for upgrading to perform the upgrading operation, when determining that the broadcast signal is not received.

The power supply for the upgrading operation is maintained, and modules not related with the upgrading are reset, when a power on command is input during the upgrading operation in a power-off state.

An aspect of an exemplary embodiment of the present invention may further include: displaying a message to confirm whether to stop the upgrading operation, when a power on command is input during the upgrading operation in a power off state; and maintaining power supply for the upgrading operation, and resetting modules not related with the upgrading, when it is confirmed to continue the upgrading operation.

The power supply for the upgrading operation is cut and all modules are reset, when it is confirmed to stop the upgrading operation.

An aspect of an exemplary embodiment of the present invention provides a broadcast receiving apparatus, comprising: a digital signal processor which performs upgrading using software included in a received broadcast signal when it is the upgrade reservation time; and a controller which controls such that power is supplied to the digital signal processor maintain upgrading operation when a power off command is input during the upgrading operation.

An aspect of an exemplary embodiment of the present invention may further include a power controller which supplies power, and the controller controls the power controller so that power for the upgrading operation is supplied to the digital signal processor, when the power off command is input during the upgrading operation.

The digital signal processor performs the upgrading operation when the current time matches the upgrade reservation time.

The controller stores information about the current level of processing the upgrading operation when the power off command is input during the upgrading operation.

The controller controls such that power for upgrading is exclusively supplied to continue the upgrading operation when the stored information about the current level of processing the upgrading operation indicates that the upgrading operation is in process.

The controller controls such that the power is exclusively supplied for the upgrading operation and power for other operations is cut, when the power off command is input during the upgrading operation.

The controller controls such that the power supply for the upgrading operation is maintained, and modules not related with the upgrading are reset, when a power on command is input during the upgrading operation in a power-off state.

An aspect of an exemplary embodiment of the present invention may additionally include: an OSD generator which generates and displays a message to confirm whether to continue or stop the upgrading operation, and the controller controls the OSD generator to display the message to confirm whether to continue or stop the upgrading operation, when a power on command is input during the upgrading operation in a power off state, and power supply for the upgrading operation is maintained, and modules not related with the upgrading are reset, when it is confirmed to continue the upgrading operation.

The controller determines whether the broadcast signal is received, when it is the upgrade reservation time, and if determining that the broadcast signal is not received, controls such that the power is supplied to perform the upgrading operation.

The controller controls such that the power supply for the upgrading operation is cut and all modules are reset, when it is confirmed to stop the upgrading operation.

### BRIEF DESCRIPTION OF THE DRAWINGS

The above aspects and features of embodiments of the present invention will become more apparent by describing certain exemplary embodiments of the present invention with reference to the accompanying drawings, in which:
FIG. 1 is a block diagram of a broadcasting receiver system according to an exemplary embodiment of the present invention;
FIG. 2 is a flowchart illustrating a method of automatically upgrading a broadcasting receiver system according to an exemplary embodiment of the present invention;
FIG. 3 is a flowchart illustrating a method of upgrading a broadcasting receiver system when the broadcasting receiver system is turned on during an automatic upgrading operation in a standby mode according to an exemplary embodiment of the present invention; and
FIG. 4 is a flowchart illustrating a method of upgrading a broadcasting receiver system when the broadcasting receiver system is turned on during an automatic upgrading operation in a standby mode according to another exemplary embodiment of the present invention.

### DETAILED DESCRIPTION OF EXEMPLARY EMBODIMENTS

Exemplary embodiments of the present invention will now be described in detail with reference to the annexed drawings. In the drawings, the same elements are denoted by the same reference numerals throughout the drawings. In the following description, detailed descriptions of known functions and configurations incorporated herein have been omitted for conciseness and clarity.

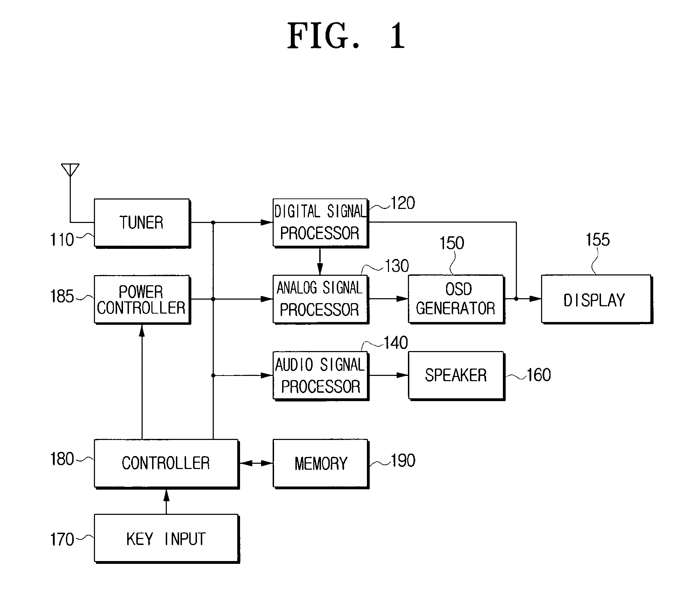

FIG. 1 is a block diagram of a broadcasting receiver system according to an exemplary embodiment of the present invention.

The broadcasting receiver system according to exemplary embodiments of the present invention is capable of automatically upgrading at the power minimum consumption when the system has changed to the standby mode by a power-off command input during an automatic upgrading operation.

Referring to FIG. 1, the broadcasting receiver system according to an exemplary embodiment of the present invention may include a tuner 110, a digital signal processor 120, an analog signal processor 130, an audio signal processor 140, an OSD generator 150, a display 155, a speaker 160, a key input 170, a controller 180, a power controller 185 and a memory 190.

The digital signal processor 120 separates the digital broadcast signal, which is turned in by the tuner 110, into video and data, de-compresses the signal and outputs the resultant data. The digital signal processor 120 upgrades using the software received through the tuner 110 when it is the upgrade time as preset in the over-the-air (OTA) information of the data signal. The OTA information may include information for software upgrade, such as the names, types, or versions of the software, or the preset upgrade time when the software is received.

The analog signal processor 130 processes the analog broadcast signal which is turned in by the tuner 110 to generate into video data. The audio signal processor 140 decodes the audio signal contained in the tuned broadcast signal, to generate analog audio data.

The OSD generator 150 generates a message according to the power-on command which is input in the process of upgrading during the standby mode. The message requests the user's confirm about whether to continue or stop the upgrading. The display 155 displays analog image corresponding to the received analog broadcast signal, or digital image corresponding to the received digital broadcast signal. At this time, the message generated by the OSD generator 150 is displayed. The speaker 160 outputs sound data which is generated by the audio signal processor 140.

The key input 170 may include a key for input and output of power on/off command, a key for input of channel change command, and a key for input of upgrade continue/stop command.

The controller 180 turns on or off the power by controlling the power controller 185 according to the power on/off command received through the key input 170. The controller 180 controls the tuner 110 to change channel when the channel change command is input through the key input 170.

In response to the power off command input through the key input 170 during upgrading, the controller controls the power controller 185 so that the power is supplied only to the tuner 110 and the digital signal processor 120 to continue upgrading.

In response to the power on command and upgrade continue command input through the key input 170 during the standby mode, the controller 180 controls the power controller 185 so that power supply to the digital signal processor 120 is maintained. In response to the upgrade stop command input through the key input 170, the controller 180 controls the power controller 185 so that power is supplied for reset operation.

The power controller 185 supplies power to the respective parts under the control of the controller 180. The memory 190 stores the status of upgrading, and upgrade reservation time.

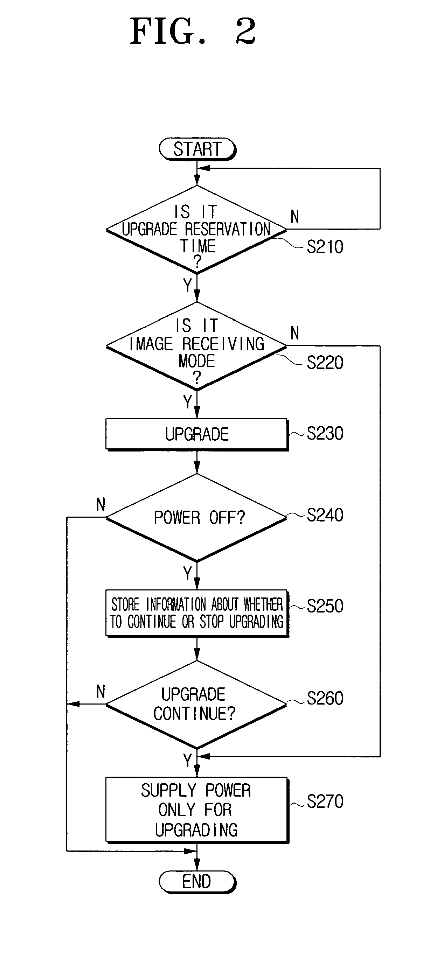

FIG. 2 is a flowchart illustrating an automatic upgrading method of a broadcast receiver according to an exemplary embodiment of the present invention.

Referring to FIG. 2, the controller 180 determines if it's the upgrade reservation time to start upgrading (S210).

If determining it to be upgrade reservation time, the controller 180 determines whether it is the image reception mode (S220). In other words, the controller 180 determines whether the image is currently received and displayed, or the operation is in standby mode.

If determining it to be image reception mode, the controller 180 controls the digital signal processor 120 to upgrade using the software received through the tuner 110 (S230).

If determining it to be standby mode, the controller 180 controls the power controller 185 to supply power to the upgrade-related components such as the tuner 110 which receives upgrade software, and the digital signal processor 120 which performs upgrading using the received upgrade software (S270).

The controller 180 continuously determines if power off command is input through the key input 170 during the upgrading (S240).

If determining the input of power off command, the controller 180 stores in the memory 190 the information about the current status of upgrading received from the digital signal processor 120 (S250). More specifically, if determining it to be the upgrade reservation time and the input of power off command during the upgrading, the controller 180 stores the status information such as `upgrade in process'.

The controller 180 determines whether the upgrading is in process based on the stored information (S260). If determining that the upgrading is in process, the controller 180 controls the power controller 185 to supply power to the tuner 110 and the digital signal processor 120 to continue upgrading, while having the components other than the tuner 110 and the digital signal processor 120 in standby mode (S270).

As explained above, because the power is supplied only for the upgrading process in the standby mode following the power off command, use of the power can be minimized during the automatic upgrading in the standby mode.

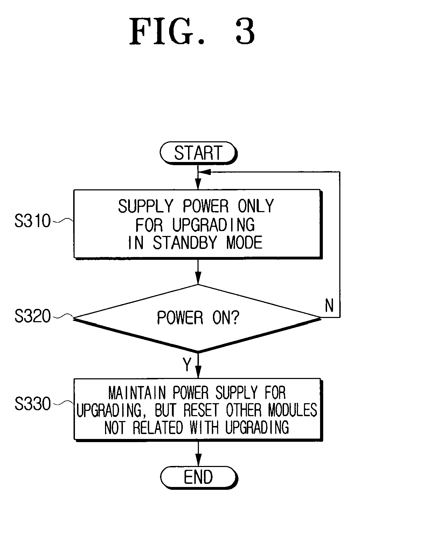

FIG. 3 is a flowchart illustrating a method of upgrading a broadcasting receiver system when the broadcasting receiver system is turned on during an automatic upgrading operation in a standby mode according to an exemplary embodiment of the present invention.

Referring to FIG. 3, the controller 180 in the standby mode controls the power controller 185 to supply power only to the upgrade-related components, that is, to the tuner 110 which receives upgrade software, and the digital signal processor 120 which performs upgrading using the received software, and controls the tuner 110 and the digital signal processor 120 to perform upgrading process (S310).

The controller 180 determines whether the power on command is input during the upgrading process in the standby mode (S320).

If determining that the power on command is input, the controller 180 controls the power controller 185 to maintain power supply to the tuner 110 and the digital signal processor 120 to maintain upgrading operations, that is, to receive the upgrade software and perform upgrading using the received software, and controls the tuner 110 and the digital signal processor 120 to perform upgrading operations accordingly (S330).

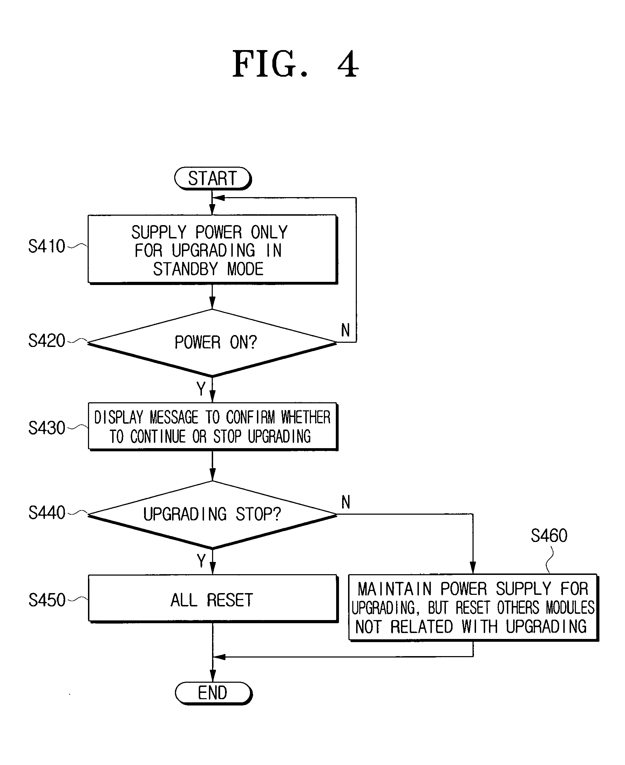

FIG. 4 is a flowchart illustrating a method of upgrading a broadcasting receiver system when the broadcasting receiver system is turned on during an automatic upgrading operation in a standby mode according to another exemplary embodiment of the present invention.

Referring to FIG. 4, the controller 180 in the standby mode controls the power controller 185 to supply minimum power, that is, to supply power only to the tuner 110 which receives upgrade software and the digital signal processor 120 which performs upgrading using the received software, and controls the tuner 110 and the digital signal processor 120 to perform upgrading operations accordingly (S410).

The controller 180 in the standby mode also determines whether the power on command is input during the upgrading (S420).

If determining that the power on command is input, the controller 180 controls the OSD generator 150 so that a message to confirm whether to continue or stop the upgrading is generated and displayed through the display 155 (S430).

The controller 180 also determines whether the upgrade stop command is input through the key input 170 (S440).

If determining that the upgrade stop command is input, the controller 180 controls the power controller 185 so that all the components are reset and driven (S450).

On the contrary, if determining that the upgrade continue command is input, the controller 180 controls the power controller 185 to maintain power supply to the upgrade-related components, and having the other components reset (S460).

As explained above, according to the present invention, use of power can be minimized during automatic upgrading in the standby mode. Additionally, system is upgraded within a shortest time possible irrespective of whether the broadcast contents are viewed or not, users can use the broadcast contents as they want and thus, user convenience is increased.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A method of automatically upgrading a broadcast receiving apparatus, comprising:
upgrading using software included in a received broadcast signal when it is the upgrade reservation time; and
supplying power to maintain upgrading operation when a power off command is input during the upgrading operation.

2. The method of claim 1, wherein the upgrading is started when the current time matches the upgrade reservation time.

3. The method of claim 1 or 2, wherein information about the current level of processing the upgrading operation is stored when the power off command is input during the upgrading operation.

4. The method of claim 3, wherein the power is turned off and power for upgrading is exclusively supplied to continue the upgrading operation when the stored information about the current level of processing the upgrading operation indicates that the upgrading operation is in process.

5. The method of any of claims 1-4, wherein the power is exclusively supplied for the upgrading operation and power for other operations is cut, when the power off command is input during the upgrading operation.

6. The method of any of claims 1-5, further comprising:
determining whether the broadcast signal is received, when it is the upgrade reservation time; and
supplying power for upgrading to perform the upgrading operation, when determining that the broadcast signal is not received.

7. The method of any of claims 1-6, wherein the power supply for the upgrading operation is maintained, and modules not related with the upgrading are reset, when a power on command is input during the upgrading operation in a power-off state.

8. The method of any of claims 1-7, further comprising:
displaying a message to confirm whether to stop the upgrading operation, when a power on command is input during the upgrading operation in a power off state; and
maintaining power supply for the upgrading operation, and resetting modules not related with the upgrading, when it is confirmed to continue the upgrading operation.

9. The method of claim 8, wherein the power supply for the upgrading operation is cut and all modules are reset, when it is confirmed to stop the upgrading operation.

10. A broadcast receiving apparatus, comprising:
a digital signal processor which performs upgrading using software included in a received broadcast signal when it is the upgrade reservation time; and
a controller which controls such that power is supplied to the digital signal processor maintain upgrading operation when a power off command is input during the upgrading operation.

11. The broadcast receiving apparatus of claim 10, further comprising a power controller which supplies power,
and the controller controls the power controller so that power for the upgrading operation is supplied to the digital signal processor, when the power off command is input during the upgrading operation.

12. The broadcast receiving apparatus of claim 10 or 11, wherein the digital signal processor performs the upgrading operation when the current time matches the upgrade reservation time.

13. The broadcast receiving apparatus of any of claims 10-12, wherein the controller stores information about the current level of processing the upgrading operation when the power off command is input during the upgrading operation.

14. The broadcast receiving apparatus of claim 13, wherein the controller controls such that power for upgrading is exclusively supplied to continue the upgrading operation when the stored information about the current level of processing the upgrading operation indicates that the upgrading operation is in process.

15. The broadcast receiving apparatus of any of claims 1-14, wherein the controller controls such that the power is exclusively supplied for the upgrading operation and power for other operations is cut, when the power off command is input during the upgrading operation.

16. The broadcast receiving apparatus of any of claims 1-15, wherein the controller controls such that the power supply for the upgrading operation is maintained, and modules not related with the upgrading are reset, when a power on command is input during the upgrading operation in a power-off state.

17. The broadcast receiving apparatus of any of claims 1-16, further comprising an OSD generator which generates and displays a message to confirm whether to continue or stop the upgrading operation,
and the controller controls the OSD generator to display the message to confirm whether to continue or stop the upgrading operation, when a power on command is input during the upgrading operation in a power off state, and
power supply for the upgrading operation is maintained, and modules not related with the upgrading are reset, when it is confirmed to continue the upgrading operation.

18. The broadcast receiving apparatus of any of claims 1-17, wherein the controller determines whether the broadcast signal is received, when it is the upgrade reservation time, and if determining that the broadcast signal is not received, controls such that the power is supplied to perform the upgrading operation.

19. The broadcast receiving apparatus of claim 18, wherein the controller controls such that the power supply for the upgrading operation is cut and all modules are reset, when it is confirmed to stop the upgrading operation.
